# EUROPÄISCHE PATENTSCHRIFT

(11) **EP 2 308 127 B1**
(45) Veröffentlichungstag und Bekanntmachung des Hinweises auf die Patenterteilung: **04.01.2012**
(21) Anmeldenummer: 09781159.0
(22) Anmeldetag: 28.07.2009
(51) Int. Cl.: H01M 10/50, H01M 2/10

(54) **AKKUMULATOR**
BATTERY
ACCUMULATEUR

(30) Priorität: 29.07.2008 DE 102008040809
(43) Veröffentlichungstag der Anmeldung: 13.04.2011
(73) Patentinhaber: Robert Bosch GmbH, 70442 Stuttgart (DE)
(72) Erfinder: DOEGE, Volker, 89561 Dischingen (DE); LEUTHNER, Stephan, 71229 Leonberg (DE); KOENIGSMANN, Martin Holger, 70193 Stuttgart (DE)
(86) Internationale Anmeldenummer: PCT/EP2009/059705
(87) Internationale Veröffentlichungsnummer: WO 2010/012707

(56) Entgegenhaltungen:
- DE-A1-102004 043 829
- US-A- 3 537 907
- US-A1- 2003 054 230
- US-B1- 6 692 864

## Beschreibung

### Stand der Technik

Die vorliegende Erfindung betrifft einen Akkumulator mit einer Mehrzahl von Akkumulatorzellen, die voneinander beabstandet in einem Akkumulatorgehäuse angeordnet sind, das zumindest teilweise mit einem Füllmaterial gefüllt ist, wobei das Füllmaterial die Akkumulatorzellen in einer vorgegebenen Füllstruktur, die eine Positionierung der Akkumulatorzellen im Akkumulatorgehäuse festlegt, zumindest abschnittsweise umgibt.

Derartige Akkumulatoren bestehen aus einzelnen, zu Packs oder Modulen zusammen geschalteten Akkumulatorzellen und werden deshalb häufig auch als Akkupacks oder Akku-Module bezeichnet. In diesen Akkumulatoren bzw. Akkupacks oder Akku-Modulen sind die einzelnen Akkumulatorzellen meist in einer symmetrischen Anordnung in einem in der Regel mit Kunststoff gefüllten Akkumulatorgehäuse angeordnet, wobei der Kunststoff die Zellen meist in einer symmetrischen Füllstruktur umgibt bzw. umbaut. Die Füllstruktur legt hierbei die Positionierung der einzelnen Akkumulatorzellen im Akkumulatorgehäuse relativ zueinander und relativ zu einer Gehäuseaußenwand des Gehäuses fest.

Aufgrund einer Erhitzung im Lade- und Entladebetrieb erzeugen die Akkumulatorzellen durch die hierbei fließenden Ströme Wärme, die die Funktionsfähigkeit der Akkumulatoren beeinträchtigen kann. Diese Wärme wird über die Kunststoff-Füllstruktur aus dem Inneren des Akkumulators über die Gehäuseaußenwand an die Umgebung abgeleitet, um eine zu starke Erhitzung der Akkumulatorzellen und somit des Akkumulators zu verhindern.

Nachteilig am Stand der Technik ist, dass die um den Mittelpunkt des Akkumulatorgehäuses herum angeordneten Akkumulatorzellen, bzw. Akkumulatorzellen mit einer größeren Anzahl benachbarter Zellen, sich meist aufgrund einer schlechteren Wärmeableitung stärker erhitzen, als die Zellen am Rand des Gehäuses bzw. als Zellen mit weniger benachbarten Zellen. Hieraus ergibt sich eine inhomogene Temperaturverteilung im Akkumulatorgehäuse, wobei die stärker erhitzten Akkumulatorzellen stärker bzw. schneller altern als die weniger erhitzten Zellen. Dies führt mit zunehmender Anzahl von Lade- und Entladezyklen zu einer frühzeitigen Alterung der stärker erhitzten Akkumulatorzellen bis zu einem Zeitpunkt, an dem durch einen Defekt einer dieser Zellen der Akkumulator vorzeitig unbrauchbar wird und somit die Lebensdauer des Akkumulators verkürzt wird. Darüber hinaus heizen sich die einzelnen Akkumulatorzellen im Lade- und Entladebetrieb auch gegenseitig auf. Dies kann insbesondere bei Akkumulatorzellen mit einer vergleichsweise großen Anzahl von unmittelbar benachbarten Akkumulatorzellen zu einer lokalen Überhitzung des Akkumulators führen, die die Sicherheit bei dessen Benutzung beeinträchtigen kann.

### Offenbarung der Erfindung

Eine Aufgabe der Erfindung ist es daher, einen neuen Akkumulator mit verbessertem Thermomanagement bereit zu stellen, bei dem eine Verlängerung der Lebensdauer und eine Verbesserung der Sicherheit im Betrieb ermöglicht wird.

Dieses Problem wird gelöst durch einen Akkumulator mit einer Mehrzahl von Akkumulatorzellen, die voneinander beabstandet in einem Akkumulatorgehäuse angeordnet sind, das zumindest teilweise mit einem Füllmaterial gefüllt ist. Das Füllmaterial umgibt die Akkumulatorzellen in einer vorgegebenen Füllstruktur, die eine Positionierung der Akkumulatorzellen im Akkumulatorgehäuse festlegt, zumindest abschnittsweise. Die Füllstruktur ist dazu ausgebildet, eine im Betrieb des Akkumulators durch Erwärmung der Akkumulatorzellen im Akkumulatorgehäuse entstehende Temperaturverteilung zumindest teilweise zu homogenisieren. Die Füllstruktur weist mindestens zwei verschiedene Abschnitte auf, in denen das Füllmaterial unterschiedliche Porositäten aufweist. Somit kann eine lokal unterschiedliche Wärmeableitung im Gehäuseinneren des Akkumulatorgehäuses erreicht werden. Die Erfindung ermöglicht somit im Betrieb des Akkumulators ein verbessertes
Thermomanagement, sodass die Lebensdauer des Akkumulators verlängert und die Gebrauchssicherheit vergrößert werden.

Gemäß einer Ausführungsform weist das Füllmaterial der Füllstruktur eine Wärmeleitfähigkeit auf, die einen vorgegebenen Schwellwert von mindestens 0,5 W/mK überschreitet. Hierbei weist das Füllmaterial der Füllstruktur bevorzugt ein Metall, eine Legierung oder einen Spezialkunststoff auf.

Somit kann die im Gehäuseinneren bzw. die von Akkumulatorzellen mit vergleichsweise vielen unmittelbar benachbarten Akkumulatorzellen erzeugte Wärme durch die Füllstruktur über eine entsprechende Gehäuseaußenwand des Akkumulatorgehäuses effizient an die Umgebung abgeleitet werden, sodass eine verbesserte Wärmeableitung der im Gehäuseinneren erzeugten Wärme erreicht wird.

Gemäß einer weiteren Ausführungsform weist das Füllmaterial der Füllstruktur mindestens zwei Materialien mit unterschiedlichen Wärmeleitfähigkeiten auf. Hierbei kann ein erstes Material mit einer ersten Wärmeleitfähigkeit einen ersten Teil der Akkumulatorzellen zumindest abschnittsweise umgeben und ein zweites Material mit einer zweiten Wärmeleitfähigkeit umgibt einen zweiten Teil der Akkumulatorzellen zumindest teilweise. Mindestens eine Akkumulatorzelle des ersten Teils der Akkumulatorzellen weist verhältnismäßig mehr unmittelbar benachbarte Akkumulatorzellen auf, als mindestens eine Akkumulatorzelle des zweiten Teils der Akkumulatorzellen, wobei die erste Wärmeleitfähigkeit größer als die zweite Wärmeleitfähigkeit ist.

Die Erfindung ermöglicht somit, die vom ersten Teil der Akkumulatorzellen erzeugte Wärme durch die Füllstruktur effizient abzuleiten, während eine zu starke Abkühlung des zweiten Teils der Akkumulatorzellen im Betrieb des Akkumulators durch die geringere Wärmeleitfähigkeit verhindert wird. Somit wird eine im Betrieb des Akkumulators durch Erwärmung der Akkumulatorzellen und gegenseitige Erhitzung entstehende Temperaturverteilung zumindest teilweise homogenisiert, sodass eine vorzeitige Alterung vereinzelter Akkumulatorzellen zumindest teilweise verhindert werden kann.

Gemäß einer weiteren Ausführungsform weist die Füllstruktur mindestens ein in dem Füllmaterial zumindest teilweise eingebettetes Einlegeelement mit einer vorgegebenen Wärmeleitfähigkeit auf. Hierbei kann das Füllmaterial eine Wärmeleitfähigkeit aufweisen, die kleiner als die vorgegebene Wärmeleitfähigkeit ist, um eine Wärmeableitung über das Füllmaterial zumindest teilweise zu reduzieren. Alternativ hierzu kann das Füllmaterial eine Wärmeleitfähigkeit aufweisen, die größer als die vorgegebene Wärmeleitfähigkeit ist, um eine Wärmeableitung über das Füllmaterial zumindest teilweise zu verstärken.

Somit kann beispielsweise bei Verwendung eines zur Füllung von Akkumulatorgehäusen gebräuchlichen Kunststoffs als Füllmaterial ein geeignetes Einlegeelement verwendet werden, um eine gewünschte Wärmeableitung wie oben beschrieben zu erreichen. Hierbei kann durch Verwenden eines gebräuchlichen Kunststoffs und eines geeigneten Einlegeelements eine einfache und kostengünstige Füllstruktur ausgebildet werden.

Das Eingangs genannte Problem wird auch gelöst durch eine Elektrowerkzeugmaschine mit einem Akkumulator, der eine Mehrzahl von Akkumulatorzellen aufweist, die voneinander beabstandet in einem Akkumulatorgehäuse angeordnet sind, das zumindest teilweise mit einem Füllmaterial gefüllt ist. Das Füllmaterial umgibt die Akkumulatorzellen in einer vorgegebenen Füllstruktur, die eine Positionierung der Akkumulatorzellen im Akkumulatorgehäuse festlegt, zumindest abschnittsweise. Die Füllstruktur ist dazu ausgebildet, eine im Betrieb des Akkumulators durch Erwärmung der Akkumulatorzellen im Akkumulatorgehäuse entstehende Temperaturverteilung zumindest teilweise zu homogenisieren, und ist dadurch gekennzeichnet, dass sie mindestens zwei verschiedene Abschnitte aufweist, in denen das Füllmaterial unterschiedliche Porositäten aufweist.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
Fig. 1 eine erste Ausführungsform eines Akkumulators gemäß der Erfindung,
Fig. 2 eine zweite Ausführungsform eines Akkumulators gemäß der Erfindung,
Fig. 3 eine dritte Ausführungsform eines Akkumulators gemäß der Erfindung,
Fig. 4 eine vierte Ausführungsform eines Akkumulators gemäß der Erfindung,
Fig. 5 eine fünfte Ausführungsform eines Akkumulators gemäß der Erfindung,
Fig. 6 eine sechste Ausführungsform eines Akkumulators gemäß der Erfindung, und
Fig. 7 eine siebte Ausführungsform eines Akkumulators gemäß der Erfindung.

### Beschreibung der Ausführungsbeispiele

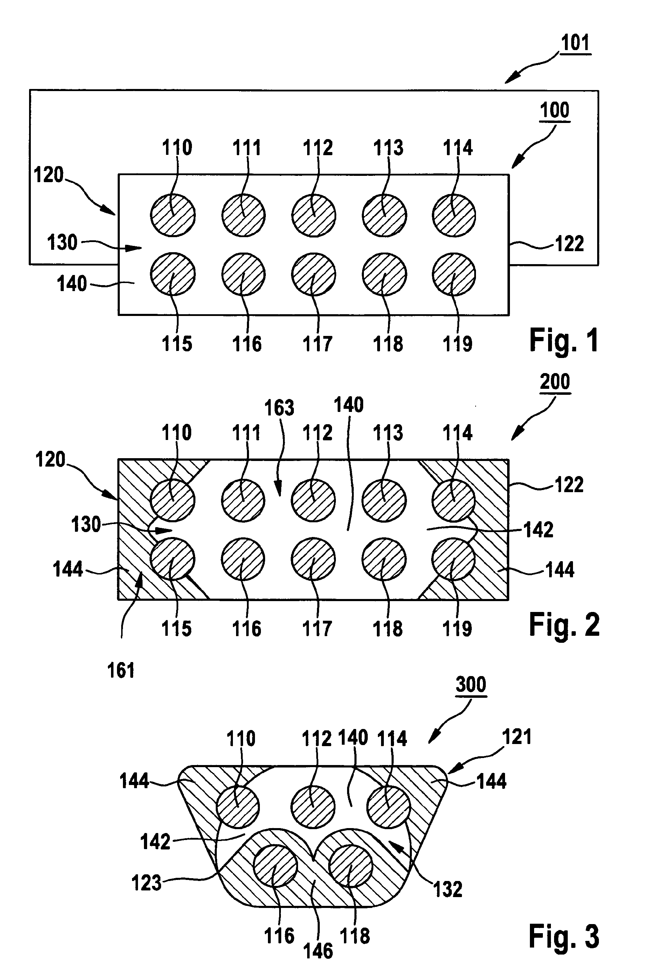

Fig. 1 zeigt einen vorzugsweise zur Stromversorgung einer schematisch dargestellten Elektrowerkzeugmaschine 101 geeigneten Akkumulator 100 mit einer Mehrzahl von Akkumulatorzellen 110, 111, 112, 113, 114, 115, 116, 117, 118, 119. Diese sind in einem Akkumulatorgehäuse 120 beispielhaft symmetrisch angeordnet und zu einem Pack oder Modul zusammen geschaltet. Die Akkumulatorzellen 110, 111, 112, 113, 114, 115, 116, 117, 118, 119 können von einem beliebigen Akkumulatortyp sein, wie z.B. NiCd, NiMh und Li-lon.

Es wird jedoch darauf hingewiesen, dass die Verwendung des Akkumulators 100 zur Stromversorgung der Elektrowerkzeugmaschine 101 lediglich beispielhaft beschrieben ist, die Verwendung des Akkumulators 100 jedoch nicht hierauf beschränkt ist. Vielmehr kann der Akkumulator 100 in vielen unterschiedlichen Vorrichtungen Anwendung finden, z.B. in einem stationären Energiespeicher oder einem Energiespeicher in Fahrzeugen. Derartige und weitere Modifikationen und Variationen sind im Rahmen der vorliegenden Erfindung möglich.

Das Akkumulatorgehäuse 120 hat eine Gehäuseaußenwand 122 und ist in seinem Inneren mindestens teilweise mit einem Füllmaterial 140 gefüllt. Dieses Füllmaterial 140 umgibt bzw. ummantelt die Akkumulatorzellen 110, 111, 112, 113, 114, 115, 116, 117, 118, 119 zumindest abschnittsweise, bevorzugt vollständig mit Ausnahme der Stirnflächen. Hierbei bildet das Füllmaterial 140 eine vorgegebene Füllstruktur 130 aus, die eine Positionierung der Akkumulatorzellen 110, 111, 112, 113, 114, 115, 116, 117, 118, 119 im Akkumulatorgehäuse 120 relativ zueinander sowie relativ zur Gehäuseaußenwand 122 festlegt.

Es wird darauf hingewiesen, dass bei gebräuchlichen Herstellungsverfahren von Akkumulatoren, bei denen Akkumulatorzellen in einem Akkumulatorgehäuse von Kunststoff umgeben sind, die Gehäuse z.B. durch Kunststoffspritzen mit dem Kunststoff gefüllt bzw. ausgegossen werden. Somit sind die Akkumulatorzellen nach einem entsprechenden Aushärten des Kunststoffs meist in einem einstückigen Kunststoffblock eingebettet. Dieser bildet in der Regel sowohl Trennwände zwischen benachbarten Akkumulatorzellen, als auch zwischen Akkumulatorzellen und der Gehäuseaußenwand. Diese Trennwände bzw. der einstückige Kunststoffblock bilden eine Kunststoffstruktur bzw. einen Kunststoffaufbau, der die Anordnung der Akkumulatorzellen im Gehäuseinneren festlegt. Analog hierzu wird im Kontext der vorliegenden Erfindung die von dem Füllmaterial 140 gebildete, aus Trennwänden zwischen einzelnen Akkumulatorzellen bzw. zwischen Akkumulatorzellen und der Gehäuseaußenwand bestehende Struktur als die "Füllstruktur" bezeichnet.

Gemäß einer Ausführungsform der Erfindung ist die Füllstruktur 130 dazu ausgebildet, eine im Betrieb des Akkumulators 100 durch Erwärmung der Akkumulatorzellen 110, 111, 112, 113, 114, 115, 116, 117, 118, 119 im Akkumulatorgehäuse 120 entstehende Temperaturverteilung zumindest teilweise zu homogenisieren. Da eine im Wesentlichen homogene Temperaturverteilung mit einer gebräuchlichen Kunststoff-Füllstruktur wie oben beschrieben nicht erreicht werden kann, weist das Füllmaterial 140 der Füllstruktur 130 vorzugsweise eine größere Wärmeleitfähigkeit auf als Kunststoff. Bevorzugt hat das Füllmaterial 140 eine Wärmeleitfähigkeit, die einen vorgegebenen Schwellwert überschreitet. Dieser ist gemäß einer Ausführungsform größer als die maximale Wärmeleitfähigkeit von gebräuchlichem Kunststoff, z.B. größer oder gleich 0,5 W/mK. Ein geeignetes, als Füllmaterial 140 der Füllstruktur 130 verwendbares Material ist z.B. Metall, beispielsweise Aluminium, eine Legierung oder ein Spezialkunststoff, z.B. Polyethylen (PE) und Polypropylen (PP) verschiedener Dichten.

In Fig. 1 ist das Akkumulatorgehäuse 120 im Querschnitt beispielhaft rechteckig ausgebildet und alle Akkumulatorzellen 110, 111, 112, 113, 114, 115, 116, 117, 118, 119 sind zumindest abschnittsweise, d.h. mit einem Abschnitt ihrer Mantelflächen, im Bereich der Gehäuseaußenwand 122 angeordnet und im Gehäuseinneren von unmittelbar benachbarten Akkumulatorzellen umgeben. Z.B. hat die Akkumulatorzelle 112 fünf unmittelbar benachbarte Akkumulatorzellen, und zwar die Zellen 111, 113, 116, 117 und 118. Die Akkumulatorzelle 110 hat dahingegen nur drei unmittelbar benachbarte Akkumulatorzellen, und zwar die Zellen 111, 115 und 116.

Da Akkumulatorzellen, wie oben beschrieben, auch von benachbarten Akkumulatorzellen aufgeheizt werden, ist davon auszugehen, dass z.B. die Akkumulatorzelle 112 sich im Betrieb des Akkumulators 100 stärker erwärmt als die Akkumulatorzelle 110, die zwei Nachbarzellen weniger hat. Da durch die symmetrische Anordnung der Akkumulatorzellen 110, 111, 112, 113, 114, 115, 116, 117, 118, 119 in dem Akkumulatorgehäuse 120 alle Akkumulatorzellen 110, 111, 112, 113, 114, 115, 116, 117, 118, 119 etwa identische Abstände zur Gehäuseaußenwand 122, aufweisen, können die äußeren Akkumulatorenzellen 110, 114, 115, 119 im Betrieb des Akkumulators 100 schneller abkühlen, da sie weniger unmittelbar benachbarte Zellen und eine größere, der Gehäuseaußenwand 122 zugewandte Mantelfläche aufweisen. Um eine zu starke Abkühlung der äußeren Akkumulatorenzellen 110, 114, 115, 119 im Betrieb des Akkumulators 100 zu verhindern, kann das Füllmaterial 140 wie bei Fig. 2 beschrieben ausgebildet werden.

Fig. 2 zeigt einen vorzugsweise zur Stromversorgung einer Elektrowerkzeugmaschine, z.B. der Elektrowerkzeugmaschine 101 von Fig. 1, geeigneten Akkumulator 200 gemäß einer weiteren Ausführungsform, der eine Abwandlung des Akkumulators 100 von Fig. 1 mit den in dem Akkumulatorgehäuse 120 angeordneten Akkumulatorzellen 110, 111, 112, 113, 114, 115, 116, 117, 118, 119 repräsentiert. Bei dem Akkumulator 200 sind die Akkumulatorzellen 110, 111, 112, 113, 114, 115, 116, 117, 118, 119 wie bei dem Akkumulator 100 von Fig. 1 in der von dem Füllmaterial 140 gebildeten Füllstruktur 130 angeordnet.

In der in Fig. 2 gezeigten Ausführungsform besteht das Füllmaterial 140 beispielhaft aus zwei unterschiedlichen Materialien 142, 144 mit unterschiedlichen Wärmeleitfähigkeiten, die in unterschiedlichen Bereichen der Füllstruktur 130 vorgesehen sind. Das Material 142 ist in einem Bereich 163 vorgesehen, der die Akkumulatorzellen 111, 112, 113, 116, 117, 118 vollständig und die Akkumulatorzellen 110, 114, 115, 119 illustrativ abschnittsweise umgibt. Das Material 144 umgibt die Akkumulatorzellen 110, 114, 115, 119 illustrativ an deren der Gehäuseaußenwand 122 zugewandten Mantelflächen.

Wie aus Fig. 2 ersichtlich, hat jede der Akkumulatorzellen 111, 112, 113, 116, 117, 118 mehr unmittelbar benachbarte Akkumulatorzellen, als jede der Akkumulatorzellen 110, 114, 115, 119. Z.B. hat die Akkumulatorzelle 111 fünf unmittelbar benachbarte Akkumulatorzellen, und zwar die Zellen 110, 112, 115, 116, 117, während die Akkumulatorzelle 110 nur drei unmittelbar benachbarte Akkumulatorzellen aufweist, und zwar die Zellen 111, 115, 116. Analog hierzu hat auch jede der Akkumulatorzellen 112, 113, 116, 117, 118 jeweils fünf unmittelbar benachbarte Akkumulatorzellen, während jede der Akkumulatorzellen 114, 115, 119 jeweils nur drei unmittelbar benachbarte Zellen aufweist. Die Akkumulatorzellen 111, 112, 113, 116, 117, 118 werden somit im Betrieb des Akkumulators 200 abgesehen von der jeweils erzeugten Eigenwärme auch von mehr benachbarten Zellen und somit stärker erhitzt, als die Akkumulatorzellen 110, 114, 115, 119. Diese können wiederum durch ihre Randlage im Akkumulatorgehäuse 120 wie bei Fig. 1 beschrieben schneller abkühlen, als die Akkumulatorzellen 111, 112, 113, 116, 117, 118, die im Inneren des Akkumulatorgehäuses 120 angeordnet sind.

Um ein zu starkes Abkühlen der Akkumulatorzellen 110, 114, 115, 119 zu verhindern, hat das Material 144, das diese Zellen zumindest abschnittsweise umgibt, eine Wärmeleitfähigkeit, die kleiner als die Wärmeleitfähigkeit des Materials 142 ist, das die Akkumulatorzellen 111, 112, 113, 116, 117, 118 zumindest abschnittsweise umgibt. Z.B. ist das Material 144 ein Kunststoff und das Material 142 ist ein Material, das eine größere Wärmeleitfähigkeit als dieser Kunststoff hat, die einen vorgegebenen Schwellwert überschreitet. Dieser ist gemäß einer Ausführungsform größer als die maximale Wärmeleitfähigkeit des Materials 144, bevorzugt größer oder gleich 0,5 W/mK. Ein geeignetes Material 142 ist z.B. Metall, beispielsweise Aluminium, eine Legierung oder ein Spezialkunststoff. Alternativ hierzu können auch Kunststoffe mit unterschiedlichen Wärmeleitfähigkeiten Anwendung finden, um die Füllstruktur 130 Kosten sparend zu erzeugen.

Somit wird eine zu schnelle Abkühlung der Akkumulatorzellen 110, 114, 115, 119 verhindert, während die von den Zellen 111, 112, 113, 116, 117, 118 erzeugte Wärme effizient und schnell an die Umgebung abgeleitet wird, sodass eine im Wesentlichen homogene Temperaturverteilung im Akkumulator 200 erzielt werden kann. Die inneren Akkumulatorzellen 111, 112, 113, 116, 117, 118 altern dementsprechend nicht unverhältnismäßig schnell im Vergleich zu den äußeren Akkumulatorzellen 110, 114, 115, 119 und die Lebensdauer der einzelnen Akkumulatorzellen 110, 111, 112, 113, 114, 115, 116, 117, 118, 119 ist aneinander angepasst.

Die Ausgestaltung der Füllstruktur 130 mit zwei unterschiedlichen Materialien 142, 144 ist besonders vorteilhaft, wenn das Material 142 zu teuer ist, eine zu große Masse aufweist, oder zu schwer und aufwändig zu verarbeiten ist. Es wird jedoch darauf hingewiesen, dass das Füllmaterial 140 auch mehr als zwei unterschiedliche Materialien aufweisen kann, die anwendungsspezifisch in der Füllstruktur 130 vorgesehen sind, wie beispielhaft bei Fig. 3 beschrieben.

Fig. 3 zeigt einen vorzugsweise zur Stromversorgung einer Elektrowerkzeugmaschine, z.B. der Elektrowerkzeugmaschine 101 von Fig. 1, geeigneten Akkumulator 300 gemäß einer weiteren Ausführungsform, bei dem lediglich die Akkumulatorzellen 110, 112, 114, 116, 118 in einem im Querschnitt etwa trapezförmigen Akkumulatorgehäuse 121 mit einer Gehäuseaußenwand 123 zu einem Pack oder Modul zusammen geschaltet sind. Der Akkumulator 300 hat eine von dem Füllmaterial 140 ausgebildete Füllstruktur 132. Um in dem Akkumulator 300 mögliche Temperaturunterschiede zwischen den Akkumulatorzellen 110, 112, 114, 116, 118 auszugleichen, weist das Füllmaterial 140 drei verschiedene Materialien 142, 144, 146 auf.

Die Akkumulatorzelle 112 hat illustrativ mit vier Nachbarzellen die meisten unmittelbar benachbarten Akkumulatorzellen, und zwar die Zellen 110, 114, 116, 118 und kann sich somit im Betrieb des Akkumulators 300 am stärksten erwärmen bzw. aufgeheizt werden. Die Akkumulatorzellen 116, 118 haben jeweils drei Nachbarzellen, und zwar die Zellen 110, 112, 118 bzw. 112, 114, 116. Die Akkumulatorzellen 110, 114 haben jeweils nur zwei Nachbarzellen, und zwar die Zellen 112, 116 bzw. 112, 118, sodass diese sich am wenigsten erwärmen bzw. aufgeheizt werden.

Wie aus Fig. 3 ersichtlich ist die Akkumulatorzelle 112 von dem Material 142 umgeben, die Akkumulatorzellen 116, 118 sind von dem Material 146 umgeben und die der Gehäuseaußenwand 123 zugewandeten Mantelflächen der Akkumulatorzellen 110, 114 sind im Wesentlichen von dem Material 144 umgeben. Gemäß einer Ausführungsform hat das Material 142 eine größere Wärmeleitfähigkeit als das Material 146. Dieses hat wiederum eine größere Wärmeleitfähigkeit als das Material 144. Somit ist die Wärmeableitung in Abhängigkeit von einer zu erwartenden Temperaturverteilung ausgestaltet und umso besser, je mehr unmittelbar benachbarte Akkumulatorzellen eine entsprechende Zelle aufweist.

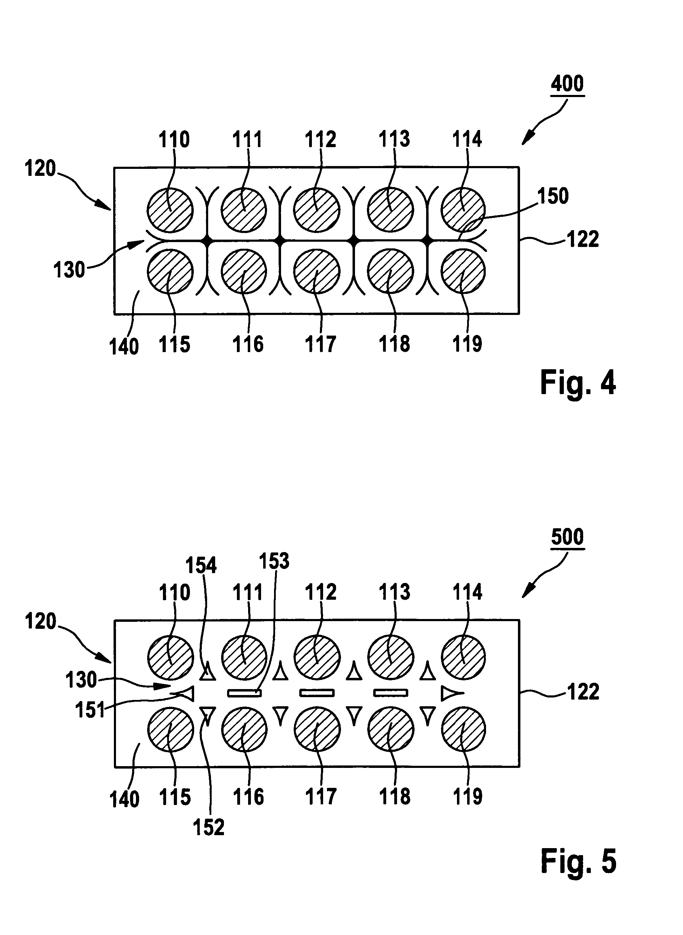

Fig. 4 zeigt einen vorzugsweise zur Stromversorgung einer Elektrowerkzeugmaschine, z.B. der Elektrowerkzeugmaschine 101 von Fig. 1, geeigneten Akkumulator 400 gemäß einer weiteren Ausführungsform, der eine Abwandlung des Akkumulators 100 von Fig. 1 repräsentiert. Bei dem Akkumulator 400 ist mindestens ein Einlegeelement 150, z.B. ein Aluminiumblech oder eine Graphitfolie, zumindest teilweise in das Füllmaterial 140 der Füllstruktur 130 eingebettet.

Das Einlegeelement 150 hat eine vorgegebene Wärmeleitfähigkeit, die entweder kleiner als die Wärmeleitfähigkeit des Füllmaterials 140 ist, um eine Wärmeableitung über das Füllmaterial 140 zumindest teilweise zu hemmen, oder die größer als die Wärmeleitfähigkeit des Füllmaterials 140 ist, um eine Wärmeableitung über das Füllmaterial 140 zumindest teilweise zu unterstützen. Die Verwendung des Einlegeelements 150 ist besonders vorteilhaft, wenn zur effizienten Wärmeableitung in dem Akkumulator 400 ein Material mit großer Wärmeleitfähigkeit erforderlich ist, dieses aber zu teuer ist oder eine zu große Masse aufweist.

Fig. 5 zeigt einen vorzugsweise zur Stromversorgung einer Elektrowerkzeugmaschine, z.B. der Elektrowerkzeugmaschine 101 von Fig. 1, geeigneten Akkumulator 500 gemäß einer weiteren Ausführungsform, der eine Abwandlung des Akkumulators 400 von Fig. 4 repräsentiert. Bei dem Akkumulator 500 ist anstelle des einzelnen Einlegeelements 150 von Fig. 4 eine Vielzahl von Einlegeelementen in dem Füllmaterial 140 der Füllstruktur 130 eingebettet. Aus Gründen der Klarheit und Übersichtlichkeit sind in Fig. 5 beispielhaft nur die Einlegeelemente 151, 152, 153, 154 mit Bezugszeichen versehen.

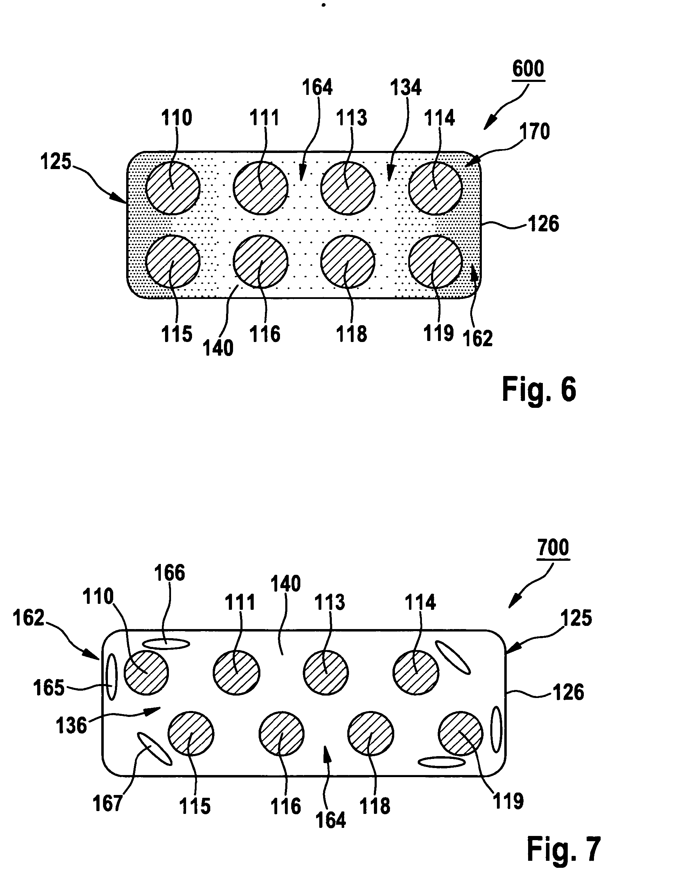

Fig. 6 zeigt einen vorzugsweise zur Stromversorgung einer Elektrowerkzeugmaschine, z.B. der Elektrowerkzeugmaschine 101 von Fig. 1, geeigneten Akkumulator 600 gemäß einer weiteren Ausführungsform, bei dem lediglich die Akkumulatorzellen 110, 111, 113, 114, 115, 116, 118, 119 in einem im Querschnitt etwa rechteckigen Akkumulatorgehäuse 125 mit einer Gehäuseaußenwand 126 zu einem Pack oder Modul zusammen geschaltet sind. Der Akkumulator 600 hat eine von dem Füllmaterial 140 ausgebildete Füllstruktur 134.

Um in dem Akkumulator 600 mögliche Temperaturunterschiede zwischen den Akkumulatorzellen 110, 111, 113, 114, 115, 116, 118, 119 zu kompensieren, weist die Füllstruktur 134 mindestens zwei unterschiedliche Bereiche 162, 164 auf, in denen das Füllmaterial 140 unterschiedliche Porositäten hat. Der Begriff "Porosität" umfasst im Kontext der vorliegenden Erfindung sowohl Porengröße als auch -form. Des Weiteren können ausgewählte Gase mit vorgegebenen Wärmeleitfähigkeiten und/oder bei vorgegebenen Drücken bzw. Unterdrücken in zugeordneten Porenstrukturen eingeschlossen sein.

Wie in Fig. 6 ersichtlich, weist der Bereich 162 beispielhaft eine Vielzahl von gepunktet dargestellten Mikroporen 170 auf. Der Bereich 164 hat eine vergleichsweise geringe Anzahl von Mikroporen 170. Somit kann eine effiziente Wärmeableitung im Bereich 164 erreicht werden, während die Wärmeableitung im Bereich 162 gehemmt wird, um wie oben beschrieben eine homogenere Temperaturverteilung im Akkumulatorgehäuse 125 zu erreichen.

Fig. 7 zeigt einen vorzugsweise zur Stromversorgung einer Elektrowerkzeugmaschine, z.B. der Elektrowerkzeugmaschine 101 von Fig. 1, geeigneten Akkumulator 700 gemäß einer weiteren Ausführungsform, der eine Abwandlung des Akkumulators 600 von Fig. 6 repräsentiert. Bei dem Akkumulator 700 weist das Füllmaterial 140 anstelle der Mikroporen 170 von Fig. 6 zumindest abschnittsweise Makroporen auf. Beispielhaft sind in Fig. 7 in dem Bereich 162 Makroporen 165, 166, 167 vorgesehen. Weitere Makroporen sind aus Gründen der Klarheit und Übersichtlichkeit nicht in Fig. 7 gekennzeichnet.

Es wird darauf hingewiesen, dass auch Kombinationen der oben beschriebenen Ausführungsformen möglich sind, um eine homogenere Temperaturverteilung in einem Akkumulator zu erreichen. Beispielsweise kann ein Akkumulator eine Füllstruktur aus einem Füllmaterial aufweisen, das aus zwei oder mehr unterschiedlichen Materialien besteht, wobei ein oder mehrere Einlegeelemente in das Füllmaterial eingebettet sind und/oder Bereiche mit unterschiedlichen Porositäten vorgesehen sind. Alternativ hierzu kann ein Akkumulator eine Füllstruktur aus einem Füllmaterial mit eingebettetem(n) Einlegeelement(en) aufweisen, wobei das Füllmaterial Bereiche mit unterschiedlichen Porositäten aufweist. Dementsprechend sind alle erdenklichen Kombinationen der oben beschriebenen Ausführungsformen möglich. Des Weiteren wird darauf hingewiesen, dass die oben beschriebenen Materialien mit den vorgegebenen Wärmeleitfähigkeiten bei jeder Ausführungsform anwendungsspezifisch eingesetzt werden können.

## Patentansprüche

1. Akkumulator mit einer Mehrzahl von Akkumulatorzellen (110, 111, 112, 113, 114, 115, 116, 117, 118, 119), die voneinander beabstandet in einem Akkumulatorgehäuse (120) angeordnet sind, das zumindest teilweise mit einem Füllmaterial (140) gefüllt ist, wobei das Füllmaterial (140) die Akkumulatorzellen (110, 111, 112, 113, 114, 115, 116, 117, 118, 119) in einer vorgegebenen Füllstruktur (130), die eine Positionierung der Akkumulatorzellen (110, 111, 112, 113, 114, 115, 116, 117, 118, 119) im Akkumulatorgehäuse (120) festlegt, zumindest abschnittsweise umgibt, wobei die Füllstruktur (130) dazu ausgebildet ist, eine im Betrieb des Akkumulators durch Erwärmung der Akkumulatorzellen (110, 111, 112, 113, 114, 115, 116, 117, 118, 119) im Akkumulatorgehäuse (120) entstehende Temperaturverteilung zumindest teilweise zu homogenisieren **dadurch gekennzeichnet, dass** die Füllstruktur (130) mindestens zwei verschiedene Abschnitte (162, 166) aufweist, in denen das Füllmaterial (140) unterschiedliche Porositäten aufweist.

2. Akkumulator nach Anspruch 1, **dadurch gekennzeichnet, dass** das Füllmaterial (140) der Füllstruktur (130) eine Wärmeleitfähigkeit aufweist, die einen vorgegebenen Schwellwert von mindestens 0,5 W/mK überschreitet.

3. Akkumulator nach Anspruch 1 oder 2, **dadurch gekennzeichnet, dass** das Füllmaterial (140) der Füllstruktur (130) ein Metall, eine Legierung oder einen Spezialkunststoff aufweist.

4. Akkumulator nach Anspruch 1 oder 2, **dadurch gekennzeichnet, dass** das Füllmaterial (140) der Füllstruktur (130) mindestens zwei Materialien (142, 144) mit unterschiedlichen Wärmeleitfähigkeiten aufweist.

5. Akkumulator nach Anspruch 4, **dadurch gekennzeichnet, dass** ein erstes Material (142) mit einer ersten Wärmeleitfähigkeit einen ersten Teil der Akkumulatorzellen (111, 112, 113, 116, 117, 118) zumindest abschnittsweise umgibt und ein zweites Material (144) mit einer zweiten Wärmeleitfähigkeit einen zweiten Teil der Akkumulatorzellen (110, 114, 115, 119) zumindest teilweise umgibt, wobei mindestens eine Akkumulatorzelle (112) des ersten Teils der Akkumulatorzellen (111, 112, 113, 116, 117, 118) verhältnismäßig mehr unmittelbar benachbarte Akkumulatorzellen (111, 113, 116, 117, 118) aufweist als mindestens eine Akkumulatorzelle (110) des zweiten Teils der Akkumulatorzellen (110, 114, 115, 119), und wobei die erste Wärmeleitfähigkeit größer als die zweite Wärmeleitfähigkeit ist.

6. Akkumulator nach einem der vorhergehenden Ansprüche, **dadurch gekennzeichnet, dass** die Füllstruktur (130) mindestens ein in dem Füllmaterial (140) zumindest teilweise eingebettetes Einlegeelement (150) mit einer vorgegebenen Wärmeleitfähigkeit aufweist.

7. Akkumulator nach Anspruch 6, **dadurch gekennzeichnet, dass** das Füllmaterial (140) eine Wärmeleitfähigkeit aufweist, die kleiner als die vorgegebene Wärmeleitfähigkeit ist, um eine Wärmeableitung über das Füllmaterial (140) zumindest teilweise zu reduzieren.

8. Akkumulator nach Anspruch 6, **dadurch gekennzeichnet, dass** das Füllmaterial (140) eine Wärmeleitfähigkeit aufweist, die größer als die vorgegebene Wärmeleitfähigkeit ist, um eine Wärmeableitung über das Füllmaterial (140) zumindest teilweise zu verstärken.

9. Elektrowerkzeugmaschine mit einem Akkumulator (100), der eine Mehrzahl von Akkumulatorzellen (110, 111, 112, 113, 114, 115, 116, 117, 118, 119) aufweist, die voneinander beabstandet in einem Akkumulatorgehäuse (120) angeordnet sind, das zumindest teilweise mit einem Füllmaterial (140) gefüllt ist, wobei das Füllmaterial (140) die Akkumulatorzellen (110, 111, 112, 113, 114, 115, 116, 117, 118, 119) in einer vorgegebenen Füllstruktur (130), die eine Positionierung der Akkumulatorzellen (110, 111, 112, 113, 114, 115, 116, 117, 118, 119) im Akkumulatorgehäuse (120) festlegt, zumindest abschnittsweise umgibt, wobei die Füllstruktur (130) dazu ausgebildet ist, eine im Betrieb des Akkumulators durch Erwärmung der Akkumulatorzellen (110, 111, 112, 113, 114, 115, 116, 117, 118, 119) im Akkumulatorgehäuse (120) entstehende Temperaturverteilung zumindest teilweise zu homogenisieren **dadurch gekennzeichnet, dass** die Füllstruktur (130) mindestens zwei verschiedene Abschultte (162,166)
aufweist, in denen das Füllmaterial (140) unterschiedliche Porositäten aufweist.

## Claims

1. Rechargeable battery having a plurality of rechargeable-battery cells (110, 111, 112, 113, 114, 115, 116, 117, 118, 119), which are arranged at a distance from one another in a rechargeable-battery housing (120) which is at least partially filled with a filling material (140), wherein the filling material (140) surrounds the rechargeable-battery cells (110, 111, 112, 113, 114, 115, 116, 117, 118, 119) at least in places in a predetermined filling structure (130), which fixes a position of the rechargeable-battery cells (110, 111, 112, 113, 114, 115, 116, 117, 118, 119) in the rechargeable-battery housing (120), wherein the filling structure (130) is designed to at least partially homogenize a temperature distribution which occurs during operation of the rechargeable battery as a result of heating of the rechargeable-battery cells (110, 111, 112, 113, 114, 115, 116, 117, 118, 119) in the rechargeable-battery housing (120), **characterized in that** the filling structure (130) has at least two different sections (162, 166), in which the filling material (140) has different porosities.

2. Rechargeable battery according to Claim 1, **characterized in that** the filling material (140) of the filling structure (130) has a thermal conductivity which is greater than a predetermined threshold value of at least 0.5 W/mK.

3. Rechargeable battery according to Claim 1 or 2, **characterized in that** the filling material (140) of the filling structure (130) has a metal, an alloy or a special plastic.

4. Rechargeable battery according to Claim 1 or 2, **characterized in that** the filling material (140) of the filling structure (130) has at least two materials (142, 144) with different thermal conductivities.

5. Rechargeable- battery according to Claim 4, **characterized in that** a first material (142) having a first thermal conductivity surrounds a first part of the rechargeable-battery cells at least in places (111, 112, 113, 116, 117, 118), and a second material (144) having a second thermal conductivity at least partially surrounds a second part of the rechargeable-battery cells (110, 114, 115, 119), wherein at least one rechargeable-battery cell (112) in the first part of the rechargeable-battery cells (111, 112, 113, 116, 117, 118) has relatively more directly adjacent rechargeable-battery cells (111, 113, 116, 117, 118) than at least one rechargeable-battery cell (110) in the second part of the rechargeable-battery cells (110, 114, 115, 119), and wherein the first thermal conductivity is higher than the second thermal conductivity.

6. Rechargeable battery according to one of the preceding claims, **characterized in that** the filling structure (130) has at least one insert element (150) which is at least partially embedded in the filling material (140) and has a predetermined thermal conductivity.

7. Rechargeable battery according to Claim 6, **characterized in that** the filling material (140) has a thermal conductivity which is lower than the predetermined thermal conductivity, in order to at least partially reduce heat dissipation via the filling material (140).

8. Rechargeable battery according to Claim 6, **characterized in that** the filling material (140) has a thermal conductivity which is higher than the predetermined thermal conductivity, in order to at least partially increase heat dissipation via the filling material (140).

9. Electric machine tool having a rechargeable battery (100) which has a plurality of rechargeable-battery cells (110, 111, 112, 113, 114, 115, 116, 117, 118, 119), which are arranged at a distance from one another in a rechargeable-battery housing (120) which is at least partially filled with a filling material (140), wherein the filling material (140) surrounds the rechargeable-battery cells (110, 111, 112, 113, 114, 115, 116, 117, 118, 119) at least in places in a predetermined filling structure (130), which fixes a position of the rechargeable-battery cells (110, 111, 112, 113, 114, 115, 116, 117, 118, 119) in the rechargeable-battery housing (120), wherein the filling structure (130) is designed to at least partially homogenize a temperature distribution which occurs during operation of the rechargeable battery as a result of heating of the rechargeable-battery cells (110, 111, 112, 113, 114, 115, 116, 117, 118, 119) in the rechargeable-battery housing (120), **characterized in that** the filling structure (130) has at least two different sections (162, 166), in which the filling material (140) has different porosities.

## Revendications

1. Accumulateur présentant plusieurs cellules d'accumulateur (110, 111, 112, 113, 114, 115, 116, 117, 118, 119) disposées à distance les unes des autres dans un boîtier (120) d'accumulateur rempli au moins en partie d'un matériau de charge (140), le matériau de charge (140) entourant au moins certaines parties des cellules d'accumulateur (110, 111, 112, 113, 114, 115, 116, 117, 118, 119) dans une structure prédéterminée de charge (130) qui définit le positionnement des cellules d'accumulateur (110, 111, 112, 113, 114, 115, 116, 117, 118, 119) dans le boîtier (120) d'accumulateur, la structure de charge (130) étant configurée pour homogénéiser au moins partiellement la répartition de température qui s'établit par échauffement des cellules d'accumulateur (110, 111, 112, 113, 114, 115, 116, 117, 118, 119) dans le boîtier (120) d'accumulateur lorsque l'accumulateur est en fonctionnement,
**caractérisé en ce que**
la structure de charge (130) présente au moins deux parties différentes (162, 166) dans lesquelles le matériau de charge (140) présente des porosités différentes.

2. Accumulateur selon la revendication 1, **caractérisé en ce que** la conductivité thermique du matériau de charge (140) de la structure de charge (130) dépasse une valeur de seuil prédéterminée d'au moins 0,5 W/m.K.

3. Accumulateur selon les revendications 1 ou 2, **caractérisé en ce que** le matériau de charge (140) de la structure de charge (130) présente un métal, un alliage ou une matière synthétique spéciale.

4. Accumulateur selon les revendications 1 ou 2, **caractérisé en ce que** le matériau de charge (140) de la structure de charge (130) présente au moins deux matériaux (142, 144) dont les conductivités thermiques sont différentes.

5. Accumulateur selon la revendication 4, **caractérisé en ce qu'**un premier matériau (142) qui présente une première conductivité thermique entoure au moins certaines parties d'une première partie (111, 112, 113, 116, 117, 118) des cellules d'accumulateur et **en ce qu'**un deuxième matériau (144) d'une deuxième conductivité thermique entoure au moins certaines parties d'une partie (110, 114, 115, 119) des cellules d'accumulateur, au moins une cellule d'accumulateur (112) de la première partie (111, 112, 113, 116, 117, 118) de cellules d'accumulateur présentant relativement plus de cellules d'accumulateur (111, 113, 116, 117, 118) directement voisines qu'au moins une cellule d'accumulateur (110) de la deuxième partie (110, 114, 115, 119) des cellules d'accumulateur, la première conductivité thermique étant supérieure à la deuxième conductivité thermique.

6. Accumulateur selon l'une des revendications précédentes, **caractérisé en ce que** la structure de charge (130) présente un élément d'insertion (150) d'une conductivité thermique prédéterminée incorporé au moins en partie dans le matériau de charge (140).

7. Accumulateur selon la revendication 6, **caractérisé en ce que** la conductivité thermique du matériau de charge (140) est inférieure à la conductivité thermique prédéterminée de manière à réduire au moins en partie l'évacuation de chaleur par l'intermédiaire du matériau de charge (140).

8. Accumulateur selon la revendication 6, **caractérisé en ce que** la conductivité thermique du matériau de charge (140) est supérieure à la conductivité thermique prédéterminée de manière à renforcer au moins en partie l'évacuation de chaleur par l'intermédiaire du matériau de charge (140).

9. Outil électrique doté d'un accumulateur (100) qui présente plusieurs cellules d'accumulateur (110, 111, 112, 113, 114, 115, 116, 117, 118, 119) disposées à distance les unes des autres dans un boîtier (120) d'accumulateur rempli au moins en partie d'un matériau de charge (140), le matériau de charge (140) entourant au moins certaines parties des cellules d'accumulateur (110, 111, 112, 113, 114, 115, 116, 117, 118, 119) dans une structure prédéterminée de charge (130) qui définit le positionnement des cellules d'accumulateur (110, 111, 112, 113, 114, 115, 116, 117, 118, 119) dans le boîtier (120) d'accumulateur, la structure de charge (130) étant configurée pour homogénéiser au moins partiellement la répartition de température qui s'établit par échauffement des cellules d'accumulateur (110, 111, 112, 113, 114, 115, 116, 117, 118, 119) dans le boîtier (120) d'accumulateur lorsque l'accumulateur est en fonctionnement,
**caractérisé en ce que**
la structure de charge (130) présente au moins deux parties différentes (162, 166) dans lesquelles le matériau de charge (140) présente des porosités différentes.
